# EUROPÄISCHE PATENTANMELDUNG

(11) **EP 4 641 950 A1**
(43) Veröffentlichungstag der Anmeldung: **29.10.2025**
(21) Anmeldenummer: 24171736.2
(22) Anmeldetag: 22.04.2024
(51) Int. Cl.: H04B 10/114, H04B 10/116

(54) **OPTISCHES KOMMUNIKATIONSSYSTEM**

(71) Anmelder: Murrelektronik GmbH, 71570 Oppenweiler (DE)
(72) Erfinder: Riedel, Steffen, 71570 Oppenweiler (DE); Scheerer, Sven, 71570 Oppenweiler (DE)
(74) Vertreter: Prinz & Partner mbB

(57) **Zusammenfassung**

Die Erfindung betrifft ein optisches Kommunikationssystem, umfassend
ein erstes Kommunikationsgerät (12) mit einer ersten Lichtquelle (14), die dazu ausgebildet ist, Licht in einem sichtbaren Spektralbereich auszusenden, und einer ersten Datenverarbeitungseinheit (16), die dazu ausgebildet ist, die erste Lichtquelle (14) so anzusteuern, dass diese ein erstes optisches Signal (18) aussendet, das eine Signalfrequenz aufweist, die für das menschliche Auge nicht wahrnehmbar ist; und
ein zweites Kommunikationsgerät (22) mit einer zweiten Datenverarbeitungseinheit (26) und einem zweiten Lichtsensor (30), der dazu ausgebildet ist, das erste optische Signal (18) der ersten Lichtquelle (14) zu empfangen, in ein elektrisches Signal umzuwandeln und das elektrische Signal an die zweite Datenverarbeitungseinheit (26) zu übertragen.

## Beschreibung

Die Erfindung betrifft ein optisches Kommunikationssystem.

In der Automatisierungstechnik gibt es viele verschiedene Geräte, die miteinander auf unterschiedliche Arten kommunizieren können. Häufig erfolgt die Kommunikation über Feldbussysteme und/oder Schnittstellen, beispielsweise Bluetooth oder WLAN.

Je einfacher ein Gerät ist, desto schwieriger ist meist das Integrieren einer adäquaten Kommunikationsschnittstelle.

Um auch einfache Komponenten anzubinden, hat sich in der Industrie der Standard IO-Link etabliert. Aber auch dieser Standard ist für einige Komponenten bzw. Applikationen noch zu aufwändig und damit zu kostspielig.

Bei besonders preissensitiven Anwendungen wird deshalb oft teilweise oder komplett auf die datentechnische Anbindung verzichtet. Dies ist jedoch nicht immer möglich oder zumindest unerwünscht, da so wertvolle Daten und/oder Eingriffsmöglichkeiten verloren gehen.

Eine alternative Lösung ist die Kommunikation über einfach aufgebaute HMIs ("Human Machine Interfaces") direkt am Gerät, beispielsweise über eingebaute Displays. Nachteilig hieran ist jedoch, dass die verfügbaren Informationen meist sehr eingeschränkt sind und die Bedienung am Gerät oft nur über rudimentäre Tastaturen möglich ist. So lassen sich Werte manchmal nur über Pfeiltasten abrufen, was wiederum ohne genaue Kenntnisse des Geräts sehr zeitintensiv ist.

Ein weiteres Problem stellt die Zuordnung physikalischer Geräte innerhalb einer Anlage zu bereits verfügbaren Datensätzen dar.

Oft werden die Geräte zur Identifikation mit Beschriftungen versehen. Eine aus dem Stand der Technik bekannte Lösung hierfür ist es, QR-Codes auf den entsprechenden Geräten anzubringen.

Jeder QR-Code enthält beispielsweise eine URL über die auf einen digitalen Zwilling des entsprechenden Gerätes zugegriffen werden kann.

Zum Auslesen des QR-Codes muss ein Lesegerät relativ nahe am Gerät positioniert werden. Ist die Positionierung unzureichend oder der QR-Code verschmutzt und/oder verblasst, ist das Auslesen oft nicht möglich. Außerdem ist es gerade bei kleinen oder runden Komponenten schwierig, einen QR-Code entsprechender Größe aufzubringen.

Die Aufgabe der Erfindung ist es daher, ein fehlerunanfälliges und preisgünstiges Kommunikationssystem bereitzustellen, mit dem auf technisch einfache Weise auf Gerätedaten zugegriffen werden kann.

Die Aufgabe wird erfindungsgemäß gelöst durch ein optisches Kommunikationssystem, umfassend ein erstes Kommunikationsgerät mit einer ersten Lichtquelle, die dazu ausgebildet ist, Licht in einem sichtbaren Spektralbereich auszusenden. Das erste Kommunikationsgerät weist außerdem eine erste Datenverarbeitungseinheit auf, die dazu ausgebildet ist, die erste Lichtquelle so anzusteuern, dass diese ein erstes optisches Signal aussendet, das eine Signalfrequenz aufweist, die für das menschliche Auge nicht wahrnehmbar ist.

Ferner umfasst das optische Kommunikationssystem ein zweites Kommunikationsgerät mit einer zweiten Datenverarbeitungseinheit und einem zweiten Lichtsensor, der dazu ausgebildet ist, das erste optische Signal der ersten Lichtquelle zu empfangen, in ein elektrisches Signal umzuwandeln und das elektrische Signal an die zweite Datenverarbeitungseinheit zu übertragen.

Ein Grundgedanke der Erfindung ist es, Licht für die Kommunikation zu nutzen. Typische aus dem Stand der Technik bekannte Lichtquellen und Lichtsensoren, beispielsweise Leuchtdioden oder Photodioden, sind kostengünstig und in großer Vielfalt verfügbar.

Das ausgesendete erste optische Signal ist also ein Lichtsignal, insbesondere mit Licht in einem sichtbaren Spektralbereich (Wellenlänge zwischen 400 nm und 750 nm).

Damit Nutzer durch die Kommunikation nicht gestört werden, ist vorgesehen, dass das erste optische Signal eine Signalfrequenz aufweist, die für das menschliche Auge nicht wahrnehmbar ist. Die erste Lichtquelle erscheint beim Aussenden des ersten optischen Signals daher als konstant leuchtend, insbesondere obwohl das optische Signal abwechselnde An- und Aus-Phasen mit einer Signalfrequenz aufweist. Diese Signalfrequenz, also die abwechselnden An- und Aus-Phasen, ist für das menschliche Auge jedoch nicht wahrnehmbar, da das menschliche Auge die sich abwechselnden An- und Aus-Phasen zeitlich nicht auflösen kann bzw. hierfür zu träge ist. Mit anderen Worten nehmen Nutzer also keine Blinkmuster und/oder Intensitätsveränderungen des Lichtes wahr. Die erste Lichtquelle kann dadurch während der Signalaussendung für weitere Zwecke genutzt werden, beispielsweise als Anzeige- oder Beleuchtungselement, beispielsweise zum Anzeigen eines Status.

In einer Ausführungsvariante ist die erste Lichtquelle eine Zustandsleuchte und dazu ausgebildet, einen Betriebszustand des ersten Kommunikationsgeräts für einen Nutzer anzuzeigen. Beispielsweise kann durch die erste Lichtquelle ein erstes optisches Signal ausgesendet werden, das für Nutzer als durchgehendes grünes oder rotes Licht wahrnehmbar ist und mit dem ein Betriebszustand wie "Gerät an" oder "Störung" signalisiert werden kann.

Beispielsweise beträgt die Signalfrequenz des ersten optischen Signals zumindest 50 Hz, insbesondere zwischen 50 Hz und 1000 Hz, bevorzugt zwischen 50 Hz und 500 Hz, besonders bevorzugt zwischen 50 Hz und 100 Hz, beispielsweise 80 Hz. Dadurch wird sichergestellt, dass das erste optische Signal von Nutzern als homogenes Lichtsignal wahrgenommen wird. Insofern entspricht eine für das menschliche Auge nicht wahrnehmbare Signalfrequenz einer Signalfrequenz von zumindest 50 Hz, insbesondere zwischen 50 Hz und 1000 Hz, z.B. zwischen 50 Hz und 100 Hz, insbesondere 80 Hz.

Das erste optische Signal kann abwechselnde An- und Aus-Phasen aufweisen, insbesondere wobei ein Verhältnis der Längen der An- zu den Aus-Phasen zwischen 55/45 und 95/5 beträgt, vorzugsweise zwischen 70/30 und 90/10, insbesondere 80/20. Es hat sich herausgestellt, dass dieses Verhältnis, insbesondere in Kombination mit einer Signalfrequenz von 80 Hz, vorteilhaft ist, um gleichzeitig eine ausreichende Helligkeit des von Nutzern wahrgenommenen Lichts und eine hohe Datenübertragungsrate zu erzielen.

Sowohl die Signalfrequenz als auch das Verhältnis der Längen der An- zu den Aus-Phasen sind dabei von entscheidender Bedeutung für die Wahrnehmung durch das menschliche Auge, da beide Parameter gemeinsam die absolute Länge der Aus-Phasen definieren. Zu lange Aus-Phasen können durch Nutzer als Flackern wahrgenommen werden. Um dies zu vermeiden, beträgt die durchschnittliche oder maximale Länge der Aus-Phasen in einer bevorzugten Ausführungsvariante zwischen 0,2 ms und 3 mc, besonders bevorzugt 2,5 ms. Dies ist technisch einfach umsetzbar.

Es ist denkbar, dass das erste optische Signal ein Datensignal ist. Dies ermöglicht eine unidirektionale Kommunikation vom ersten Kommunikationsgerät zum zweiten Kommunikationsgerät. Die Datenübertragung kann beispielsweise erfolgen, indem einzelne An- und/oder Aus-Phasen des ersten optischen Signals weggelassen, verlängert oder verkürzt werden.

Es sind aber auch weitere Ausgestaltungen des erfindungsgemäßen Kommunikationsgerätes denkbar, in denen eine bidirektionale Kommunikation zwischen dem ersten Kommunikationsgerät und dem zweiten Kommunikationsgerät möglich ist.

Um dies zu erreichen, umfasst das zweite Kommunikationsgerät in einer Ausführungsform eine zweite Lichtquelle, die dazu ausgebildet ist, Licht in einem sichtbaren Spektralbereich auszusenden. Die zweite Datenverarbeitungseinheit ist dazu ausgebildet, die zweite Lichtquelle so anzusteuern, dass diese ein zweites optisches Signal aussendet, das eine Signalfrequenz aufweist, die für das menschliche Auge nicht wahrnehmbar ist.

Das erste Kommunikationsgerät kann weiterhin einen ersten Lichtsensor aufweisen, der dazu ausgebildet ist, das zweite optische Signal der zweiten Lichtquelle zu empfangen, in ein elektrisches Signal umzuwandeln und das elektrische Signal an die erste Datenverarbeitungseinheit zu übertragen.

In einer Ausführungsform des optischen Kommunikationssystems ist vorgesehen, dass die erste Lichtquelle und der erste Lichtsensor durch ein erstes gemeinsames Bauteil gebildet sind.

Dadurch können das Aussenden des ersten optischen Signals und das Empfangen des zweiten optischen Signals mit nur einer einzigen physikalischen Komponente realisiert werden, was wiederum einen technisch einfachen und sehr kostengünstigen Aufbau möglich macht.

In einer Variante ist das erste gemeinsame Bauteil eine erste Leuchtdiode mit einer ersten Sperrschichtkapazität. In diesem Zusammenhang ist denkbar, dass die erste Datenverarbeitungseinheit dazu ausgebildet ist, die erste Leuchtdiode zur Signalerfassung in Sperrrichtung so zu betreiben, dass die erste Sperrschichtkapazität aufgeladen wird, und dann die erste Leuchtdiode in Durchlassrichtung zu schalten, sodass sich die erste Sperrschichtkapazität mit einer ersten Entladecharakteristik entlädt, die Informationen über einen Beleuchtungszustand der ersten Leuchtdiode umfasst.

Wird die erste Leuchtdiode beim Entladen beleuchtet (beispielsweise durch Licht des zweiten optischen Signals), werden durch den photoelektrischen Effekt zusätzliche Ladungsträger generiert. Durch deren Rekombination mit den Ladungsträgern, die für die Aufladung der Sperrschichtkapazität verantwortlich sind, kann die Sperrschichtkapazität schneller entladen werden. Anhand der Entladecharakteristik kann dann auf den Beleuchtungszustand der ersten Leuchtdiode rückgeschlossen werden.

Vereinfacht ausgedrückt kann die erste Leuchtdiode deshalb also nicht nur als erste Lichtquelle, sondern durch regelmäßiges Umpolen auch als erster Lichtsensor betrieben werden.

Die hierzu notwendige Ansteuerung ist technisch einfach umsetzbar und wenig fehleranfällig.

In einer weiteren Ausführungsform ist vorgesehen, dass das optische Kommunikationssystem, insbesondere das erste Kommunikationsgerät, einen ersten diskreten oder integrierten Schwellenwertschalter, insbesondere einen ersten Schmitt-Trigger oder einen ersten Komparator, umfasst, der dazu ausgebildet ist, die erste Entladecharakteristik in ein erstes digitales elektrisches Signal umzuwandeln. Die Informationen über den Beleuchtungszustand der ersten Leuchtdiode werden also digital umgesetzt, was deren Verarbeitung durch die erste Datenverarbeitungseinheit vereinfacht oder überhaupt erst möglich macht. Daten aus dem zweiten optischen Signal, können so im ersten Kommunikationsgerät digital verfügbar gemacht und effizient genutzt oder weitergegeben werden.

In einer weiteren Variante des optischen Kommunikationssystems bilden die zweite Lichtquelle und der zweite Lichtsensor ein zweites gemeinsames Bauteil.

Das zweite gemeinsame Bauteil kann beispielsweise eine zweite Leuchtdiode mit einer zweiten Sperrschichtkapazität sein. In diesem Zusammenhang ist denkbar, dass die zweite Datenverarbeitungseinheit dazu ausgebildet ist, die zweite Leuchtdiode zur Signalerfassung in Sperrrichtung so zu betreiben, dass die zweite Sperrschichtkapazität aufgeladen wird, dann die zweite Leuchtdiode in Durchlassrichtung zu schalten, sodass sich die zweite Sperrschichtkapazität mit einer zweiten Entladecharakteristik entlädt, die Informationen über einen Beleuchtungszustand der zweiten Leuchtdiode umfasst.

Das optische Kommunikationssystem, insbesondere das zweite Kommunikationsgerät, kann ferner einen zweiten diskreten oder integrierten Schwellenwertschalter, insbesondere einen zweiten Schmitt-Trigger oder einen zweiten Komparator, aufweisen, der dazu ausgebildet ist, die zweite Entladecharakteristik in ein zweites digitales elektrisches Signal umzuwandeln

Bezüglich des zweiten gemeinsamen Bauteils, also der Ausgestaltung als Leuchtdiode und dem Vorsehen des zweiten Schwellwertenschalters, gelten die zum ersten gemeinsamen Bauteil bereits diskutierten Vorteile in gleicher Weise.

Ferner sind Ausführungsformen denkbar, bei denen nur ein erstes gemeinsames Bauteil, nur ein zweites gemeinsames Bauteil oder gleichzeitig ein erstes und ein zweites gemeinsames Bauteil vorgesehen sind. Letztere Variante ist besonders vorteilhaft, da hierdurch ein besonders günstiger Aufbau des optischen Kommunikationssystems realisiert werden kann.

In einer weiteren Variante ist vorgesehen, dass die erste Lichtquelle dazu ausgebildet ist, ein erstes optisches Synchronisierungssignal auszusenden, das vom zweiten Lichtsensor detektierbar ist, um das erste und das zweite Kommunikationsgerät zu synchronisieren. Alternativ oder zusätzlich kann auch die zweite Lichtquelle dazu ausgebildet sein, ein zweites optisches Synchronisierungssignal auszusenden, das vom ersten Lichtsensor detektierbar ist, um das erste und das zweite Kommunikationsgerät zu synchronisieren.

Durch die Synchronisierung wird sichergestellt, dass optische Datensignale jedes der Kommunikationsgeräte durch das jeweils andere Kommunikationsgerät empfangen und verarbeitet werden können.

Es ist denkbar, dass das erste Kommunikationsgerät und/oder das zweite Kommunikationsgerät dazu ausgebildet ist bzw. sind, durch das Synchronisieren aus einem Ruhemodus in einen Datenaustauschmodus zu wechseln. Es ist also nicht notwendig, die betreffenden Kommunikationsgeräte dauerhaft in einem Datenaustauschmodus zu betreiben. Dies spart Ressourcen und erhöht die Datensicherheit.

Das erste Kommunikationsgerät kann ein Feldgerät sein, insbesondere ein Sensor oder ein Aktor in einer Industrieanlage.

Das zweite Kommunikationsgerät ist beispielsweise ein Smartphone oder Tablet. Alternativ kann das zweite Kommunikationsgerät auch ein Schnittstellengerät sein, das dazu ausgebildet ist, mit einem Smartphone, Tablet und/oder Computersystem zu kommunizieren.

Dadurch können Daten des ersten Kommunikationsgerätes sehr einfach durch das zweite Kommunikationsgerät zugänglich gemacht werden, beispielsweise indem das zweite Kommunikationsgerät an den Ort des ersten Kommunikationsgerätes gebracht wird und durch die Kommunikation die entsprechenden Daten ausgelesen werden.

Es können bei einer entsprechenden Ausgestaltung der Kommunikationsgeräte selbstverständlich auch Daten durch bidirektionale Kommunikation vom zweiten auf das erste Kommunikationsgerät übertragen werden. Beispielsweise kann ein Servicetechniker das zweite Kommunikationsgerät mitführen und damit bei Bedarf eine neue Software auf das erste Kommunikationsgerät aufspielen.

Weitere Merkmale und Vorteile der Erfindung ergeben sich aus der nachfolgenden Beschreibung sowie aus den Zeichnungen, auf die Bezug genommen wird. In den Zeichnungen zeigen:
- Fig. 1 eine schematische Darstellung eines erfindungsgemäßen optischen Kommunikationssystems gemäß einer beispielhaften Ausführungsform;
- Fig. 2 eine schematische Darstellung einer Schaltungsanordnung eines ersten Kommunikationsgeräts mit einer Leuchtdiode, die als Lichtquelle und als Lichtsensor betreibbar ist;
- Fig. 3 ein Diagramm einer an der Leuchtdiode aus Fig. 2 anliegenden Spannung über der Zeit während einer Ladephase sowie einer Entladephase bei gleichzeitiger Beleuchtung der Leuchtdiode;
- Fig. 4 ein Diagramm einer an der Leuchtdiode aus Fig. 2 anliegenden Spannung über der Zeit während einer Ladephase sowie einer Entladephase ohne Beleuchtung;
- Fig. 5 eine schematische Darstellung einer Schaltungsanordnung eines zweiten Kommunikationsgeräts mit einer Leuchtdiode, die als Lichtquelle und als Lichtsensor betreibbar ist;
- Fig. 6 eine schematische Darstellung einer alternativen Schaltungsanordnung mit einer Leuchtdiode, die als Lichtquelle und als Lichtsensor betreibbar ist;
- Fig. 7 eine schematische Darstellung eines Ausführungsbeispiels eines Verfahrens zum Betreiben des optischen Kommunikationssystems 10 aus Fig. 1; und
- Fig. 8 Signalverläufe eines ersten optischen Signals und eines optischen Synchronisierungssignals.

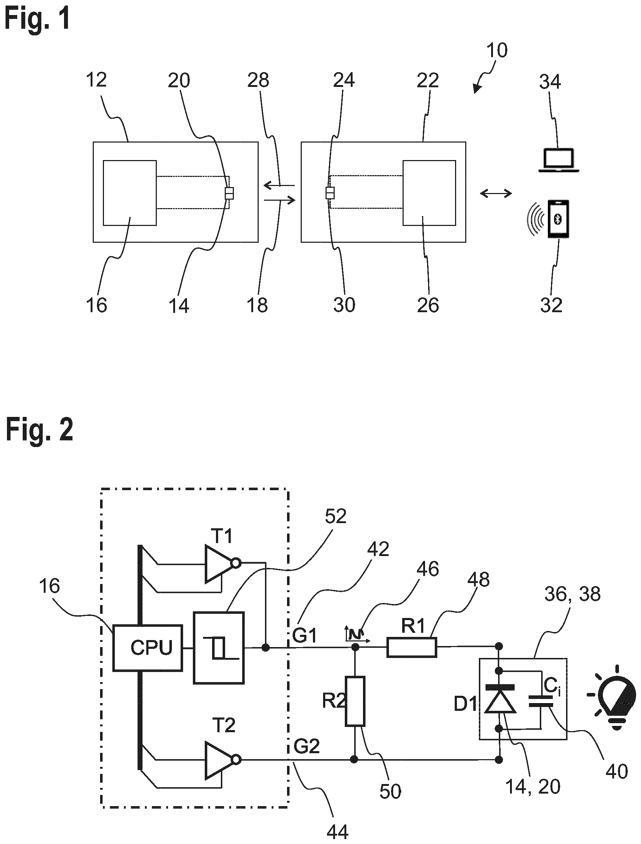

Fig. 1 zeigt eine schematische Darstellung eines optischen Kommunikationssystems 10.

Das optische Kommunikationssystem 10 weist ein erstes Kommunikationsgerät 12 auf, das im Ausführungsbeispiel als Feldgerät ausgebildet ist. Das erste Kommunikationsgerät 12 kann beispielsweise innerhalb einer Industrieanlage angeordnet sein und dort als Sensor oder Aktor genutzt werden.

Das erste Kommunikationsgerät 12 umfasst eine erste Lichtquelle 14, die dazu ausgebildet ist, Licht in einem sichtbaren Spektralbereich auszusenden.

Im Ausführungsbeispiel ist die erste Lichtquelle 14 eine Zustandsleuchte des ersten Kommunikationsgeräts 12 und dazu ausgebildet, einen Betriebszustand des ersten Kommunikationsgeräts 12 für einen Nutzer anzuzeigen. Beispielsweise kann bei der Nutzung als Sensor oder Aktor angezeigt werden, ob der Betrieb ordnungsgemäß abläuft, ein Fehler vorliegt und/oder eine Wartung notwendig ist.

Ferner weist das erste Kommunikationsgerät 12 eine erste Datenverarbeitungseinheit 16 auf, die dazu ausgebildet ist, die erste Lichtquelle 14 so anzusteuern, dass diese ein erstes optisches Signal 18 aussendet, das eine Signalfrequenz aufweist, die für das menschliche Auge nicht wahrnehmbar ist. Dadurch können vom ersten Kommunikationsgerät 12 mittels des ersten optischen Signals 18 Informationen an andere Kommunikationsgeräte übertragen werden, ohne die Funktion als Zustandsleuchte zu beeinträchtigen.

Das erste optische Signal 18 kann beispielsweise An- und Aus-Phasen aufweisen, die sich mit einer Signalfrequenz von 80 Hz oder mehr abwechseln. Das Verhältnis der Längen der An- zu den Aus-Phasen beträgt im Ausführungsbeispiel 80/20.

Das erste Kommunikationsgerät 12 weist außerdem einen ersten Lichtsensor 20 auf, durch den optische Signale empfangen, in elektrische Signale umgewandelt und dann an die erste Datenverarbeitungseinheit 16 übertragen werden können.

Das optische Kommunikationssystem 10 weist ferner ein zweites Kommunikationsgerät 22 auf, das mit dem ersten Kommunikationsgerät 12 bidirektional kommunizieren kann.

Das zweite Kommunikationsgerät 22 umfasst eine zweite Lichtquelle 24, die dazu ausgebildet ist, Licht in einem sichtbaren Spektralbereich auszusenden.

Außerdem weist das zweite Kommunikationsgerät 22 eine zweite Datenverarbeitungseinheit 26 auf, die dazu ausgebildet ist, die zweite Lichtquelle 24 so anzusteuern, dass diese ein zweites optisches Signal 28 aussendet, das eine Signalfrequenz aufweist, die für das menschliche Auge nicht wahrnehmbar ist.

Selbstverständlich ist der erste Lichtsensor 20 des ersten Kommunikationsgeräts 12 auch dazu in der Lage, dieses zweite optische Signal 28 zu empfangen und in ein elektrisches Signal umzuwandeln.

Weiterhin umfasst das zweite Kommunikationsgerät 22 einen zweiten Lichtsensor 30, der dazu ausgebildet ist, das erste optische Signal 18 der ersten Lichtquelle 14 zu empfangen, in ein elektrisches Signal umzuwandeln und das elektrische Signal an die zweite Datenverarbeitungseinheit 26 zu übertragen.

Im Ausführungsbeispiel ist das zweite Kommunikationsgerät 22 ein Schnittstellengerät, das dazu ausgebildet ist, mit einem Smartphone, Tablet 32 und/oder einem Computersystem 34 zu kommunizieren, beispielsweise über eine Bluetooth-Schnittstelle, WLAN-Schnittstelle oder vergleichbare kabellose oder kabelbasierte Verbindung, beispielsweise USB.

Alternativ kann das zweite Kommunikationsgerät 22 auch selbst ein Smartphone oder Tablet 32 sein.

Besonders an der beschriebenen Ausführungsvariante ist, dass die erste Lichtquelle 14 und der erste Lichtsensor 20 durch eine einzige physikalische Komponente realisiert sind.

Dies wird nachfolgend anhand von Fig. 2 näher erläutert, die eine schematische Darstellung einer vom ersten Kommunikationsgerät 12 umfassten Schaltungsanordnung zeigt.

Die erste Datenverarbeitungseinheit 16 des ersten Kommunikationsgeräts 12 ist in der gezeigten Variante ein Mikrocontroller, der beispielsweise einen Prozessor (CPU) umfasst.

Die erste Lichtquelle 14 und der erste Lichtsensor 20 sind durch ein erstes gemeinsames Bauteil 36 gebildet.

Im Ausführungsbeispiel ist das erste gemeinsame Bauteil 36 eine erste Leuchtdiode 38 mit einer ersten Sperrschichtkapazität 40, die von der ersten Datenverarbeitungseinheit 16 über einen ersten Ausgangsport 42 sowie einen ersten Eingangsport 44 ansteuerbar ist.

Bei den Ports kann es sich beispielsweise um GPIO-Kanäle (General Purpose Input/Output) handeln. Diese können je nach Konfiguration als Eingänge oder Ausgänge genutzt werden. Die Benennungen als Eingangsport 44 und Ausgangsport 42 wurden zur einfacheren Referenzierung eingeführt und sind auf den Fall der Nutzung der ersten Leuchtdiode 38 als erster Lichtsensor 20 bezogen. Alternativ könnten der Ausgangsport 42 und Eingangsport 44 daher auch als erster Port 42 oder als zweiter Port 44 bezeichnet werden.

Insbesondere ist die erste Datenverarbeitungseinheit 16 dazu ausgebildet, die erste Leuchtdiode 38 zur Signalerfassung in Sperrrichtung so zu betreiben, dass die erste Sperrschichtkapazität 40 aufgeladen wird, und dann die erste Leuchtdiode 38 in Durchlassrichtung zu schalten, sodass sich die erste Sperrschichtkapazität 40 mit einer ersten Entladecharakteristik 46 entlädt, die Informationen über einen Beleuchtungszustand der ersten Leuchtdiode 38 umfasst.

Der Betrieb der ersten Leuchtdiode 38 zur Signalerfassung wird im Folgenden kurz beschrieben.

Zunächst konfiguriert die erste Datenverarbeitungseinheit 16 den ersten Ausgangsport 42 so, dass dort eine positive Spannung (VCC) gegenüber dem ersten Eingangsport 44 mit dem Bezugspotenzial (GND) anliegt.

Die erste Leuchtdiode 38 ist mit dem ersten Ausgangsport 42 und ersten Eingangsport 44 so verbunden, dass sie bei dieser Konfiguration in Sperrrichtung geschaltet ist, wodurch sich die erste Sperrschichtkapazität 40 auflädt.

Anschließend konfiguriert die erste Datenverarbeitungseinheit 16 den ersten Ausgangsport 42 so um, dass er als Eingang dient.

Bei dieser Konfiguration kann sich die erste Sperrschichtkapazität 40 über die ersten Widerstände 48, 50 mit der ersten Entladecharakteristik 46 entladen.

Um die erste Entladecharakteristik 46 in ein digitales elektrisches Signal umzuwandeln, umfasst das erste Kommunikationsgerät 12 einen ersten Schwellenwertschalter 52, der als Schmitt-Trigger ausgebildet ist und der zwischen dem ersten Ausgangsport 42 und der ersten Datenverarbeitungseinheit 16 angeordnet ist.

Die erste Entladecharakteristik 46 ist abhängig vom Beleuchtungszustand der ersten Leuchtdiode 38. Wird die erste Leuchtdiode 38 beim Entladen beleuchtet, kommt es zu einem photoelektrischen Effekt. In der ersten Leuchtdiode 38 werden freie Ladungsträger generiert, welche die Entladung der ersten Sperrschichtkapazität 40 durch Rekombination beschleunigen.

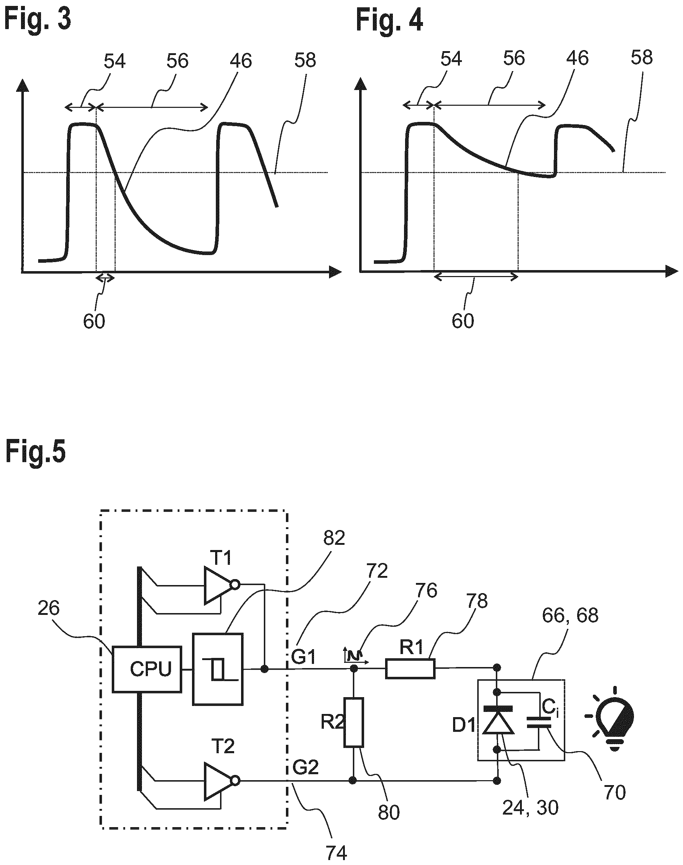

Dies ist anhand von Fig.3 und Fig. 4 schematisch gezeigt.

In Fig. 3 ist die erste Entladecharakteristik 46 der ersten Leuchtdiode 38 als Spannungsverlauf über der Zeit während einer Ladephase 54 sowie einer Entladephase 56 bei gleichzeitiger Beleuchtung der ersten Leuchtdiode 38 gezeigt.

In Fig. 4 ist die erste Entladecharakteristik 46 zum Vergleich ohne Beleuchtung gezeigt.

Anhand der beiden Figuren ist ersichtlich, dass die Spannung aufgrund der Entladung der ersten Sperrschichtkapazität 40 im beleuchteten Zustand deutlich schneller abfällt.

Es kann ein Schwellenwert 58 für die Spannung vorgegeben und die Zeitspanne 60 bestimmt werden, innerhalb derer die Spannung beim Entladen auf den Schwellenwert 58 abfällt.

Ist die Zeitspanne 60 vergleichsweise kurz, so lässt dies auf eine Beleuchtung rückschließen.

Alternativ oder zusätzlich können auch Spannungswerte zu vorgegebenen Zeitpunkten miteinander verglichen werden, um eine Aussage über den Beleuchtungszustand zu treffen.

Die erste Leuchtdiode 38 kann so als erster Lichtsensor 20 betrieben werden.

Wird der erste Eingangsport 44 durch die erste Datenverarbeitungseinheit 16 als Ausgang umkonfiguriert, so wird die Leuchtdiode 38 in Durchlassrichtung geschaltet. Sie kann dann Licht aussenden und als erste Lichtquelle 14 genutzt werden.

Selbstverständlich ist es auch möglich, dass beim zweiten Kommunikationsgerät 22 die zweite Lichtquelle 24 und der zweite Lichtsensor 30 ebenfalls durch eine einzige physikalische Komponente realisiert sind.

Der Aufbau und die Funktionsweise sind im Ausführungsbeispiel analog zum ersten Kommunikationsgerät 12 und werden anhand von Fig. 5 kurz erläutert.

Die zweite Lichtquelle 24 und der zweite Lichtsensor 30 sind durch ein zweites gemeinsames Bauteil 66 gebildet.

Im Ausführungsbeispiel ist das zweite gemeinsame Bauteil 66 eine zweite Leuchtdiode 68 mit einer zweiten Sperrschichtkapazität 70, die von der zweiten Datenverarbeitungseinheit 26 über einen zweiten Ausgangsport 72 sowie einen zweiten Eingangsport 74 ansteuerbar ist.

Bei den Ports kann es sich, wie auch beim ersten Kommunikationsgerät 12, um GPIO-Kanäle handeln.

Die zweite Datenverarbeitungseinheit 26 ist dazu ausgebildet, die zweite Leuchtdiode 68 zur Signalerfassung in Sperrrichtung so zu betreiben, dass die zweite Sperrschichtkapazität 70 aufgeladen wird, und dann die zweite Leuchtdiode 68 in Durchlassrichtung zu schalten, sodass sich die zweite Sperrschichtkapazität 70 mit einer zweiten Entladecharakteristik 76 entlädt, die Informationen über einen Beleuchtungszustand der zweiten Leuchtdiode 68 umfasst.

Der Betrieb der zweiten Leuchtdiode 68 zur Signalerfassung erfolgt analog zu dem der ersten Leuchtdiode 38.

Zunächst konfiguriert die zweite Datenverarbeitungseinheit 26 den zweiten Ausgangsport 72 so, dass dort eine positive Spannung (VCC) gegenüber dem zweiten Eingangsport 74 mit dem Bezugspotenzial (GND) anliegt.

Die zweite Leuchtdiode 68 ist mit dem zweiten Ausgangsport 72 und zweiten Eingangsport 74 so verbunden, dass sie bei dieser Konfiguration in Sperrrichtung geschaltet ist, wodurch sich die zweite Sperrschichtkapazität 70 auflädt.

Anschließend konfiguriert die zweite Datenverarbeitungseinheit 26 den zweiten Ausgangsport 72 so um, dass er als Eingang dient.

Bei dieser Konfiguration kann sich die zweite Sperrschichtkapazität 70 über die zweiten Widerstände 78, 80 mit der zweiten Entladecharakteristik 76 entladen.

Um die zweite Entladecharakteristik 76 in ein digitales elektrisches Signal umzuwandeln, umfasst das zweite Kommunikationsgerät 22 einen zweiten als Schmitt-Trigger ausgebildeten diskreten oder integrierten Schwellenwertschalter 82, der zwischen dem zweiten Ausgangsport 72 und der zweiten Datenverarbeitungseinheit 26 angeordnet ist.

Die zweite Entladecharakteristik 76 ist abhängig vom Beleuchtungszustand der zweiten Leuchtdiode 68. Wird die zweite Leuchtdiode 68 beim Entladen beleuchtet, kommt es zu einem photoelektrischen Effekt. In der zweiten Leuchtdiode 68 werden freie Ladungsträger generiert, welche die Entladung der zweiten Sperrschichtkapazität 70 durch Rekombination beschleunigen.

Analog zum ersten Kommunikationsgerät 12 kann durch eine Erfassung der Entladezeit und/oder Spannung zu bestimmten Zeitpunkten auf den Beleuchtungszustand der zweiten Leuchtdiode 68 rückgeschlossen werden.

Auch die Nutzung der zweiten Leuchtdiode 68 als zweite Lichtquelle 24 durch entsprechendes Umkonfigurieren des zweiten Eingangsports 74 und zweiten Ausgangsports 72 ist möglich.

Selbstverständlich ist die Nutzung der Sperrschichtkapazitäten 40, 70 zum Detektieren eingehender optischer Signale nicht einschränkend zu verstehen.

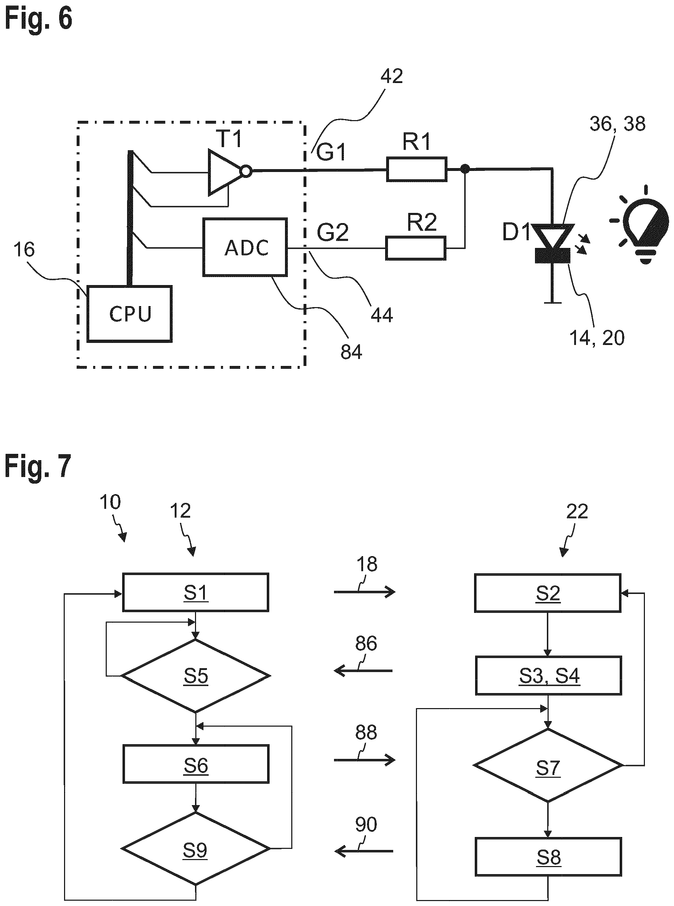

Fig. 6 zeigt eine alternative Schaltungsanordnung, mit der die erste Lichtquelle 14 und der erste Lichtsensor 20 ebenfalls durch eine einzige physikalische Komponente realisiert werden können.

Auch in dieser Variante sind die erste Lichtquelle 14 und der erste Lichtsensor 20 durch ein erstes gemeinsames Bauteil 36 gebildet, insbesondere eine erste Leuchtdiode 38. Die erste Datenverarbeitungseinheit 16 ist ein Mikrocontroller.

Die erste Leuchtdiode 38 wird in dieser Ausführungsvariante als Photoelement genutzt. Sie gibt beim Einfall von Licht eine kleine Menge Energie zurück. Diese kann erfasst und ausgewertet werden, beispielsweise mittels eines Komparators und/oder eines ADC-Einganges 84 (Analog-Digital-Umsetzer) des Mikrocontrollers. Alternativ ist eine Erfassung über externe Schaltungen möglich.

Beim Betrieb der ersten Leuchtdiode 38 als erste Lichtquelle 14 steuert die erste Datenverarbeitungseinheit 16 die erste Leuchtdiode 38 über einen ersten Ausgangsport 42 in Durchlassrichtung an.

Zur Nutzung als erster Lichtsensor 20 wird die erste Leuchtdiode 38 zur Sperrschichtentladung kurz gegen das Bezugspotenzial (GND) geschaltet.

Anschließend kann die erste Leuchtdiode 38 als Photoelement verwendet werden. Im Falle einer Beleuchtung entstehen freie Ladungsträger und somit auch eine Spannung, die dann entweder über den Komparator und/oder ADC-Eingang 84 in ein digitales Signal gewandelt werden kann, welches wiederum mittels der ersten Datenverarbeitungseinheit 16 auswertbar ist.

Selbstverständlich ist es auch möglich, die zweite Lichtquelle 24 und den zweiten Lichtsensor 30 auf analoge Weise als zweites gemeinsames Bauteil 66 umzusetzen und anzusteuern.

Fig. 7 zeigt ein Ausführungsbeispiel eines erfindungsgemäßen Verfahrens zum Betreiben des optischen Kommunikationssystems 10 aus Fig. 1.

In einem ersten Schritt S1 des Verfahrens sendet das erste Kommunikationsgerät 12 mittels der ersten Lichtquelle 14 ein erstes optisches Signal 18 aus, das abwechselnde An- und Aus-Phasen mit einer Signalfrequenz aufweist, die für das menschliche Auge nicht wahrnehmbar ist.

In einem zweiten Schritt S2 des Verfahrens erfasst der zweite Lichtsensor 30 das erste optische Signal 18.

In einem dritten Schritt S3 generiert die zweite Datenverarbeitungseinheit 26 einen Synchronisierungscode basierend auf dem erfassten ersten optischen Signal 18.

In einem vierten Schritt S4 sendet die zweite Lichtquelle 24 den Synchronisierungscode als optisches Synchronisierungssignal 86 aus. Da das optische Synchronisierungssignal 86 im Ausführungsbeispiel vom zweiten Kommunikationsgerät 22 ausgesendet wird, wird es nachfolgend auch als zweites optisches Synchronisierungssignal 86 bezeichnet. Das zweite optische Synchronisierungssignal 86 ist eine mögliche Variante eines zweiten optischen Signals 28.

In einem fünften Schritt S5 des Verfahrens wird das zweite optische Synchronisierungssignal 86 durch den ersten Lichtsensor 20 erfasst. Basierend darauf werden dann das erste Kommunikationsgerät 12 und das zweite Kommunikationsgerät 22 synchronisiert.

Im Fall, dass das zweite optische Synchronisierungssignal 86 nicht erkannt wird und/oder die Synchronisierung scheitert, kann der fünfte Verfahrensschritt S5 wiederholt werden.

In einem sechsten Schritt S6 des Verfahrens sendet das erste Kommunikationsgerät 12 nach erfolgreicher Synchronisierung mittels der ersten Lichtquelle 14 ein erstes optisches Datensignal 88 aus.

Das erste optische Datensignal 88 wird in einem siebten Schritt S7 vom zweiten Lichtsensor 30 empfangen. Optional kann vorgesehen sein, dass die mit dem ersten optischen Datensignal 88 übertragenen Daten einer zyklischen Redundanzprüfung unterzogen werden, um sicherzustellen, dass bei der Übertragung keine Fehler aufgetreten sind.

Falls keine fehlerfreie Datenübertragung stattgefunden hat, kann vorgesehen sein, dass die Schritte S2 bis S4 durch das zweite Kommunikationsgerät 22 wiederholt werden, um das erste Kommunikationsgerät 12 und das zweite Kommunikationsgerät 22 erneut miteinander zu synchronisieren.

Optional kann auch das zweite Kommunikationsgerät 22 in einem achten Verfahrensschritt S8 ein zweites optisches Datensignal 90 durch die zweite Lichtquelle 24 aussenden. Das zweite optische Datensignal 90 kann dabei als eine weitere mögliche Variante eines zweiten optischen Signals 28 angesehen werden.

Das zweite optische Datensignal 90 wird dann in einem neunten Verfahrensschritt S9 durch den ersten Lichtsensor 20 empfangen.

Auch die mit dem zweiten optischen Datensignal 90 übertragenen Daten können einer zyklischen Redundanzprüfung unterzogen werden, um sicherzustellen, dass bei der Übertragung keine Fehler aufgetreten sind.

Insofern keine fehlerfreie Datenübertragung stattgefunden hat, kann vorgesehen sein, dass das erste Kommunikationsgerät 12 die von ihm durchgeführten Verfahrensschritte mit dem ersten Schritt S1 von neuem beginnt.

Auf diese Wiese ist eine fehlerunanfällige bidirektionale Kommunikation zwischen dem ersten Kommunikationsgerät 12 und dem zweiten Kommunikationsgerät 22 möglich.

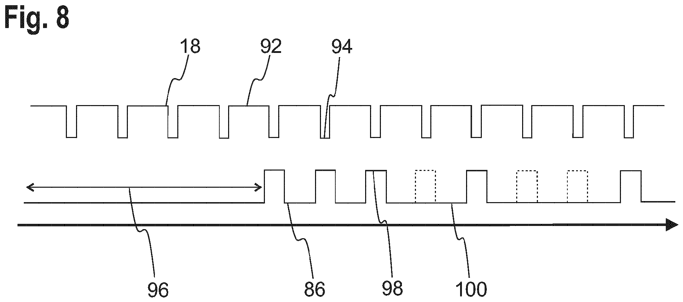

Zur weiteren Verdeutlichung des Kommunikationsvorganges, insbesondere der Synchronisierung, sind in Fig. 8 mögliche Signalverläufe des ersten optischen Signals 18 und des zweiten optischen Synchronisierungssignals 86 als Lichtintensität über der Zeit dargestellt.

Das erste optische Signal 18 weist An-Phasen 92 und Aus-Phasen 94 auf, die sich mit einer Signalfrequenz von 80 Hz abwechseln und daher für das menschliche Auge nicht getrennt voneinander wahrnehmbar sind. Das Verhältnis der Längen der An-Phasen 92 zu den Aus-Phasen 94 beträgt 80/20.

Es ist denkbar, dass das erste optisches Signal 18 von der ersten Lichtquelle 14 in einem Normalbetriebszustand und/oder Ruhemodus des ersten Kommunikationsgeräts 12 in Schritt S1 dauerhaft oder wiederholt ausgesendet wird.

Wird das zweite Kommunikationsgerät 22 entsprechend nahe am ersten Kommunikationsgerät 12 positioniert, kann das erste optische Signal 18 in Schritt S2 vom zweiten Lichtsensor 30 erfasst werden.

Das zweite Kommunikationsgerät 22 kann sich dadurch während einer Initialisierungsphase 96 auf die Taktung des ersten optischen Signals 18 anpassen.

Im Ausführungsbeispiel erstellt das zweite Kommunikationsgerät 22 basierend auf dem während der Initialisierungsphase 96 erfassten ersten optischen Signal 18 in Schritt S3 den Synchronisierungscode und sendet diesen im Anschluss an die Initialisierungsphase 96 in Schritt S4 als zweites optisches Synchronisierungssignal 86 aus.

Wie in Fig. 8 dargestellt, weist das zweite optische Synchronisierungssignal 86 ebenfalls abwechselnde An-Synchronisationsphasen 98 und Aus-Synchronisationsphasen 100 auf, die komplementär zu den An- und Aus-Phasen 92, 94 des ersten optischen Signals 18 sind und vom ersten Lichtsensor 20 in Schritt S5 detektiert werden können.

Komplementär bedeutet in diesem Zusammenhang, dass An-Synchronisationsphasen 98, während der Aus-Phasen 94 des ersten optischen Signals 18 vorliegen.

Bei einer Ausführung des ersten Kommunikationsgerätes 12 mit einer ersten Leuchtdiode 38, die als erstes gemeinsames Bauteil 36 genutzt wird (wie anhand von Fig. 2 beschrieben), bedeutet dies, dass die An-Synchronisationsphasen 98 des zweiten optischen Synchronisierungssignals 86 dann vorliegen, wenn die erste Leuchtdiode 38 als erster Lichtsensor 20 agiert und diese erfassen kann. Selbstverständlich muss dabei nicht während jeder Aus-Phase 94 im ersten optischen Signal 18 eine An-Synchronisationsphasen 98 im zweiten optischen Synchronisierungssignal 86 vorliegen.

Wie anhand von Fig. 8 ersichtlich, können einzelne An-Synchronisationsphasen 98 des zweiten optischen Synchronisierungssignals 86 gezielt weggelassen werden, um so ein unregelmäßiges Bitmuster zu bilden. Mittels dieses Bitmusters kann das zweite Kommunikationsgerät 22 den Synchronisierungscode an das erste Kommunikationsgerät 12 übertragen.

In diesem Zusammenhang ist auch denkbar, dass das zweite optische Synchronisierungssignal 86 ein Sicherheitsmerkmal umfasst, um einen Datenzugriff durch Unberechtigte zu verhindern. Beispielsweise kann vorgesehen sein, dass mit dem zweiten optischen Synchronisierungssignal 86 ein Passwort übertragen wird, welches, wenn es vom ersten Kommunikationsgerät 12 erfasst wird, das erste Kommunikationsgerät 12 dazu veranlasst, einen Datenaustausch freizugeben.

Im Ausführungsbeispiel werden das erste Kommunikationsgerät 12 und das zweite Kommunikationsgerät 22 durch das zweite optische Synchronisierungssignal 86 derart miteinander synchronisiert, dass ein Datenaustausch zwischen ihnen ermöglicht wird.

Insbesondere wird das erste Kommunikationsgerät 12 durch das Synchronisieren dazu veranlasst, aus einem Ruhemodus in einen Datenaustauschmodus zu wechseln. Das zweite optische Synchronisierungssignal 86 dient hierbei vereinfacht ausgedrückt als Start-Code.

Eine Datenübertragung vom ersten Kommunikationsgerät 12 zum zweiten Kommunikationsgerät 22 kann dann beispielsweise durch das Einbringen gezielter Variationen in das erste optische Signal 18 erfolgen, insbesondere indem einzelne An- und/oder Aus-Phasen 92, 94 verlängert, verkürzt oder gänzlich weggelassen werden. Vereinfach ausgedrückt kann es sich beim ersten optischen Datensignal 88 also um ein modifiziertes erstes optisches Signal 18 handeln.

Die Signalfrequenz von beispielsweise 80 Hz und/oder das durchschnittliche Verhältnis der An-Phasen 92 zu den Aus-Phasen 94 von beispielsweise 80/20 kann dabei grundsätzlich beibehalten werden, sodass auch das erste optische Datensignal 88 von Nutzern als homogenes Licht wahrgenommen wird.

Die Ausführungsbeispiele sind selbstverständlich nicht einschränkend zu verstehen. Wenn beispielsweise ein Verfahrensschritt oder Vorgang beschrieben wird, so bedeutet dies, dass das erfindungsgemäße optische Kommunikationssystem 10 oder eines der Kommunikationsgeräte 12, 22 dazu ausgebildet und eingerichtet sein kann, den entsprechenden Verfahrensschritt oder Vorgang auszuführen. Umgekehrt gilt im Falle einer Eignungsangabe des erfindungsgemäßen optischen Kommunikationssystems 10 oder eines der Kommunikationsgeräte 12, 22 zum Ausführen eines Verfahrensschrittes oder Vorganges, dass das erfindungsgemäße Verfahren eben jenen Verfahrensschritt oder Vorgang umfassen kann.

## Patentansprüche

1. Optisches Kommunikationssystem, umfassend
- ein erstes Kommunikationsgerät (12) mit einer ersten Lichtquelle (14), die dazu ausgebildet ist, Licht in einem sichtbaren Spektralbereich auszusenden, und einer ersten Datenverarbeitungseinheit (16), die dazu ausgebildet ist, die erste Lichtquelle (14) so anzusteuern, dass diese ein erstes optisches Signal (18) aussendet, das eine Signalfrequenz aufweist, die für das menschliche Auge nicht wahrnehmbar ist;
- ein zweites Kommunikationsgerät (22) mit einer zweiten Datenverarbeitungseinheit (26) und einem zweiten Lichtsensor (30), der dazu ausgebildet ist, das erste optische Signal (18) der ersten Lichtquelle (14) zu empfangen, in ein elektrisches Signal umzuwandeln und das elektrische Signal an die zweite Datenverarbeitungseinheit (26) zu übertragen.

2. Optisches Kommunikationssystem nach Anspruch 1, wobei die erste Lichtquelle (14) eine Zustandsleuchte ist, die dazu ausgebildet ist, einen Betriebszustand des ersten Kommunikationsgeräts (12) für einen Nutzer anzuzeigen.

3. Optisches Kommunikationssystem nach Anspruch 1 oder 2, wobei die Signalfrequenz des ersten optischen Signals (18) zumindest 50 Hz beträgt, insbesondere zwischen 50 Hz und 1000 Hz, bevorzugt zwischen 60 Hz und 500 Hz, besonders bevorzugt 80 Hz, und/oder wobei das erste optische Signal (18) sich abwechselnde An-Phasen (92) und Aus-Phasen (94) aufweist, insbesondere wobei ein Verhältnis der Längen der An-Phasen (92) zu den Aus-Phasen (94) zwischen 55/45 und 95/5 beträgt, bevorzugt zwischen 70/30 und 90/10, besonders bevorzugt 80/20.

4. Optisches Kommunikationssystem nach einem der vorhergehenden Ansprüche, wobei
- das zweite Kommunikationsgerät (22) eine zweite Lichtquelle (24) umfasst, die dazu ausgebildet ist, Licht in einem sichtbaren Spektralbereich auszusenden, und wobei die zweite Datenverarbeitungseinheit (26) dazu ausgebildet ist, die zweite Lichtquelle (24) so anzusteuern, dass diese ein zweites optisches Signal (28) aussendet, das eine Signalfrequenz aufweist, die für das menschliche Auge nicht wahrnehmbar ist; und wobei
- das erste Kommunikationsgerät (12) einen ersten Lichtsensor (20) aufweist, der dazu ausgebildet ist, das zweite optische Signal (28) der zweiten Lichtquelle (24) zu empfangen, in ein elektrisches Signal umzuwandeln und das elektrische Signal an die erste Datenverarbeitungseinheit (16) zu übertragen.

5. Optisches Kommunikationssystem gemäß Anspruch 4, wobei die erste Lichtquelle (14) und der erste Lichtsensor (20) durch ein erstes gemeinsames Bauteil (36) gebildet sind.

6. Optisches Kommunikationssystem gemäß Anspruch 5, wobei das erste gemeinsame Bauteil (36) eine erste Leuchtdiode (38) mit einer ersten Sperrschichtkapazität (40) ist, wobei die erste Datenverarbeitungseinheit (16) dazu ausgebildet ist, die erste Leuchtdiode (38) zur Signalerfassung in Sperrrichtung so zu betreiben, dass die erste Sperrschichtkapazität (40) aufgeladen wird, dann die erste Leuchtdiode (38) in Durchlassrichtung zu schalten, sodass sich die erste Sperrschichtkapazität (40) mit einer ersten Entladecharakteristik (46) entlädt, die Informationen über einen Beleuchtungszustand der ersten Leuchtdiode (38) umfasst.

7. Optisches Kommunikationssystem nach Anspruch 6, umfassend einen ersten Schwellenwertschalter (52), insbesondere Schmitt-Trigger, der dazu ausgebildet ist, die erste Entladecharakteristik (46) in ein erstes digitales elektrisches Signal umzuwandeln.

8. Optisches Kommunikationssystem nach einem der Ansprüche 4 bis 7, wobei die zweite Lichtquelle (24) und der zweite Lichtsensor (30) durch ein zweites gemeinsames Bauteil (66) gebildet sind.

9. Optisches Kommunikationssystem nach Anspruch 8, wobei das zweite gemeinsame Bauteil (66) eine zweite Leuchtdiode (68) mit einer zweiten Sperrschichtkapazität (70) ist, wobei die zweite Datenverarbeitungseinheit (26) dazu ausgebildet ist, die zweite Leuchtdiode (68) zur Signalerfassung in Sperrrichtung so zu betreiben, dass die zweite Sperrschichtkapazität (70) aufgeladen wird, dann die zweite Leuchtdiode (68) in Durchlassrichtung zu schalten, sodass sich die zweite Sperrschichtkapazität (70) mit einer zweiten Entladecharakteristik (76) entlädt, die Informationen über einen Beleuchtungszustand der zweiten Leuchtdiode (68) umfasst.

10. Optisches Kommunikationssystem nach Anspruch 9, umfassend einen zweiten Schwellenwertschalter (82), insbesondere Schmitt-Trigger, der dazu ausgebildet ist, die zweite Entladecharakteristik (76) in ein zweites digitales elektrisches Signal umzuwandeln.

11. Optisches Kommunikationssystem nach einem der Ansprüche 4 bis 10, wobei die erste Lichtquelle (14) dazu ausgebildet ist, ein erstes optisches Synchronisierungssignal auszusenden, das vom zweiten Lichtsensor (30) detektierbar ist, um das erste Kommunikationsgerät (12) und das zweite Kommunikationsgerät (22) zu synchronisieren und/oder wobei die zweite Lichtquelle (24) dazu ausgebildet ist, ein zweites optisches Synchronisierungssignal (86) auszusenden, das vom ersten Lichtsensor (20) detektierbar ist, um das erste Kommunikationsgerät (12) und das zweite Kommunikationsgerät (22) zu synchronisieren.

12. Optisches Kommunikationssystem nach Anspruch 11, wobei das erste Kommunikationsgerät (12) und/oder zweite Kommunikationsgerät (22) dazu ausgebildet ist bzw. sind, durch das Synchronisieren aus einem Ruhemodus in einen Datenaustauschmodus zu wechseln.

13. Optisches Kommunikationssystem nach einem der vorhergehenden Ansprüche, wobei das erste Kommunikationsgerät (12) ein Feldgerät ist.

14. Optisches Kommunikationssystem nach einem der vorhergehenden Ansprüche, wobei das zweite Kommunikationsgerät (22) ein Smartphone oder Tablet (32) ist oder wobei das zweite Kommunikationsgerät ein Schnittstellengerät ist, das dazu ausgebildet ist, mit einem Smartphone, Tablet (32) und/oder Computersystem (34) zu kommunizieren.

## Geänderte Patentansprüche

### Geänderte Patentansprüche gemäss Regel 137(2) EPÜ.

1. Optisches Kommunikationssystem, umfassend
- ein erstes Kommunikationsgerät (12) mit einer ersten Lichtquelle (14), einem ersten Lichtsensor (20) und einer ersten Datenverarbeitungseinheit (16), wobei das erste Kommunikationsgerät (12) als ein Feldgerät für eine Industrieanlage ausgebildet ist; wobei die erste Lichtquelle (14) eine Zustandsleuchte ist, die dazu ausgebildet ist, einen Betriebszustand des ersten Kommunikationsgeräts (12) für einen Nutzer anzuzeigen, wobei der Betriebszustand angibt, ob ein Betrieb ordnungsgemäß abläuft, ein Fehler vorliegt oder eine Wartung notwendig ist; und
- ein zweites Kommunikationsgerät (22) mit einer zweiten Lichtquelle (24), einem zweiten Lichtsensor (30) und einer zweiten Datenverarbeitungseinheit (26),
- wobei die erste Lichtquelle (14) dazu ausgebildet ist, Licht in einem sichtbaren Spektralbereich auszusenden, wobei die erste Datenverarbeitungseinheit (16), dazu ausgebildet ist, die erste Lichtquelle (14) so anzusteuern, dass diese ein erstes optisches Signal (18) aussendet, das eine Signalfrequenz aufweist, die für das menschliche Auge nicht wahrnehmbar ist,
- wobei die zweite Lichtquelle (24) dazu ausgebildet ist, Licht in einem sichtbaren Spektralbereich auszusenden, wobei die zweite Datenverarbeitungseinheit (26) dazu ausgebildet ist, die zweite Lichtquelle (24) so anzusteuern, dass diese ein zweites optisches Signal (28) aussendet, das eine Signalfrequenz aufweist, die für das menschliche Auge nicht wahrnehmbar ist,
- wobei der erste Lichtsensor (20) dazu ausgebildet ist, das zweite optische Signal (28) der zweiten Lichtquelle (24) zu empfangen, in ein elektrisches Signal umzuwandeln und das elektrische Signal an die erste Datenverarbeitungseinheit (16) zu übertragen, und
- wobei der zweite Lichtsensor (30) dazu ausgebildet ist, das erste optische Signal (18) der ersten Lichtquelle (14) zu empfangen, in ein elektrisches Signal umzuwandeln und das elektrische Signal an die zweite Datenverarbeitungseinheit (26) zu übertragen.

2. Optisches Kommunikationssystem nach Anspruch 1, wobei die Signalfrequenz des ersten optischen Signals (18) zumindest 50 Hz beträgt, insbesondere zwischen 50 Hz und 1000 Hz, bevorzugt zwischen 60 Hz und 500 Hz, besonders bevorzugt 80 Hz, und/oder wobei das erste optische Signal (18) sich abwechselnde An-Phasen (92) und Aus-Phasen (94) aufweist, insbesondere wobei ein Verhältnis der Längen der An-Phasen (92) zu den Aus-Phasen (94) zwischen 55/45 und 95/5 beträgt, bevorzugt zwischen 70/30 und 90/10, besonders bevorzugt 80/20.

3. Optisches Kommunikationssystem gemäß Anspruch 1 oder 2, wobei die erste Lichtquelle (14) und der erste Lichtsensor (20) durch ein erstes gemeinsames Bauteil (36) gebildet sind.

4. Optisches Kommunikationssystem gemäß Anspruch 3, wobei das erste gemeinsame Bauteil (36) eine erste Leuchtdiode (38) mit einer ersten Sperrschichtkapazität (40) ist, wobei die erste Datenverarbeitungseinheit (16) dazu ausgebildet ist, die erste Leuchtdiode (38) zur Signalerfassung in Sperrrichtung so zu betreiben, dass die erste Sperrschichtkapazität (40) aufgeladen wird, dann die erste Leuchtdiode (38) in Durchlassrichtung zu schalten, sodass sich die erste Sperrschichtkapazität (40) mit einer ersten Entladecharakteristik (46) entlädt, die Informationen über einen Beleuchtungszustand der ersten Leuchtdiode (38) umfasst.

5. Optisches Kommunikationssystem nach Anspruch 4, umfassend einen ersten Schwellenwertschalter (52), insbesondere Schmitt-Trigger, der dazu ausgebildet ist, die erste Entladecharakteristik (46) in ein erstes digitales elektrisches Signal umzuwandeln.

6. Optisches Kommunikationssystem nach einem der vorhergehenden Ansprüche, wobei die zweite Lichtquelle (24) und der zweite Lichtsensor (30) durch ein zweites gemeinsames Bauteil (66) gebildet sind.

7. Optisches Kommunikationssystem nach Anspruch 6, wobei das zweite gemeinsame Bauteil (66) eine zweite Leuchtdiode (68) mit einer zweiten Sperrschichtkapazität (70) ist, wobei die zweite Datenverarbeitungseinheit (26) dazu ausgebildet ist, die zweite Leuchtdiode (68) zur Signalerfassung in Sperrrichtung so zu betreiben, dass die zweite Sperrschichtkapazität (70) aufgeladen wird, dann die zweite Leuchtdiode (68) in Durchlassrichtung zu schalten, sodass sich die zweite Sperrschichtkapazität (70) mit einer zweiten Entladecharakteristik (76) entlädt, die Informationen über einen Beleuchtungszustand der zweiten Leuchtdiode (68) umfasst.

8. Optisches Kommunikationssystem nach Anspruch 7, umfassend einen zweiten Schwellenwertschalter (82), insbesondere Schmitt-Trigger, der dazu ausgebildet ist, die zweite Entladecharakteristik (76) in ein zweites digitales elektrisches Signal umzuwandeln.

9. Optisches Kommunikationssystem nach einem der vorhergehenden Ansprüche, wobei die erste Lichtquelle (14) dazu ausgebildet ist, ein erstes optisches Synchronisierungssignal auszusenden, das vom zweiten Lichtsensor (30) detektierbar ist, um das erste Kommunikationsgerät (12) und das zweite Kommunikationsgerät (22) zu synchronisieren und/oder wobei die zweite Lichtquelle (24) dazu ausgebildet ist, ein zweites optisches Synchronisierungssignal (86) auszusenden, das vom ersten Lichtsensor (20) detektierbar ist, um das erste Kommunikationsgerät (12) und das zweite Kommunikationsgerät (22) zu synchronisieren.

10. Optisches Kommunikationssystem nach Anspruch 9, wobei das erste Kommunikationsgerät (12) und/oder zweite Kommunikationsgerät (22) dazu ausgebildet ist bzw. sind, durch das Synchronisieren aus einem Ruhemodus in einen Datenaustauschmodus zu wechseln.

11. Optisches Kommunikationssystem nach einem der vorhergehenden Ansprüche, wobei das zweite Kommunikationsgerät (22) ein Smartphone oder Tablet (32) ist oder wobei das zweite Kommunikationsgerät ein Schnittstellengerät ist, das dazu ausgebildet ist, mit einem Smartphone, Tablet (32) und/oder Computersystem (34) zu kommunizieren.
